# EUROPÄISCHE PATENTANMELDUNG

(11) **EP 2 735 496 A2**
(43) Veröffentlichungstag der Anmeldung: **28.05.2014**
(21) Anmeldenummer: 13193591.8
(22) Anmeldetag: 20.11.2013
(51) Int. Cl.: B62D 33/03, F16B 5/07

(54) **Bordwand für Nutzfahrzeug-Ladeflächen**

(30) Priorität: 22.11.2012 DE 102012111287
(71) Anmelder: F. Hesterberg & Söhne GmbH & Co. KG, 58256 Ennepetal (DE)
(72) Erfinder: Röhrig, Michael Armin, 42477 Radevormwald (DE)
(74) Vertreter: Christophersen & Partner

(57) **Zusammenfassung**

Vorgeschlagen wird eine Bordwand für Nutzfahrzeug-Ladeflächen, die aus Profilelementen (5) mit jeweils einer Innen, einer Außenseite und Verriegelungselementen an den beiden Längsrändern zusammengesetzt ist. Die Verriegelungselemente sind angeformte Hakenabschnitte (20A, 20B), die mit korrespondierend gestalteten Hakenabschnitten des benachbarten Profilelements durch Verrasten verbindbar sind. Die Hakenabschnitte (20A, 20B) weisen eine rechtwinklig zu den Innen- und Außenseiten (11,12) angeordnete erste Fläche (21) und eine gemeinsam mit der ersten Fläche (21) einen Eckwinkel (25) bildende zweite Fläche (22) auf. Um durch konstruktive Maßnahmen zu einem stets sicheren, nämlich vollständigen Verrasten der beiden zu verbindenden Profilelemente bei der Montage der Bordwand zu kommen, weisen für ein vollständiges Einrasten die Hakenabschnitte (20A, 20B) im Bereich des Eckwinkels (25) eine Aussparung (30) zur Aufnahme von beispielsweise Verunreinigungen, Beschichtungsresten oder Lackansammlungen auf.

## Beschreibung

Die Erfindung betrifft eine Bordwand für Nutzfahrzeug-Ladeflächen, die aus Profilelementen mit jeweils einer Innenseite, einer Außenseite und Verriegelungselementen an den beiden Längsrändern zusammengesetzt ist, wobei die Verriegelungselemente angeformte Hakenabschnitte sind, die mit korrespondierend gestalteten Hakenabschnitten des benachbarten Profilelements durch Verrasten verbindbar sind, und wobei die Hakenabschnitte eine im Wesentlichen rechtwinklig zu den Innen- und Außenseiten angeordnete erste Fläche, und eine gemeinsam mit der ersten Fläche einen Eckwinkel bildende zweite Fläche aufweisen.

Derartige, üblicherweise aus in einem Strangpressverfahren gefertigten Leichtmetallprofilen hergestellte Bordwände sind für Ladeflächen von Pritschenwagen und pritschenwagenähnlichen Anhängern bekannt, unter anderem aus der DE 35 29 662 A1. Zur Erstellung einer aus mehreren Profilelementen zusammengesetzten Bordwand sind die Profilelemente an ihren Längsrändern mit ersten Verriegelungselementen versehen, die als an dem Profil angeformte Hakenabschnitte gestaltet sind. Jeder Hakenabschnitt ist durch Verrasten mit einem korrespondierend gestalteten Hakenabschnitt des benachbarten Profilelements verbindbar. Zweite, im Bereich der Längsränder angeformte Verriegelungselemente bilden eine Art Schwenkgelenk zwischen den zu verbindenden Profilelementen. Zum Verbinden zweier Profilelemente werden diese daher mit ihren zweiten Verriegelungselementen gegeneinander gesetzt, und anschließend um das durch diese zweiten Verriegelungselemente gebildete Gelenk verschwenkt, bis es an den ersten Verriegelungselementen, also den Hakenabschnitten, durch gegenseitigen Eingriff der Haken zu einem Einschnappen kommt. Zur Realisierung der Haken weisen die Hakenabschnitte eine in etwa rechtwinklig zu den Flachseiten des Profilelements angeordnete erste Fläche, und eine gemeinsam mit der ersten Fläche einen Eckwinkel bildende zweite Fläche auf.

In der Praxis werden die Profilelemente vor ihrem Verbinden mit einer Beschichtung versehen, z. B. einzeln lackiert. Selbst wenn eine solche Lackierung mit gleichmäßiger Lackstärke erfolgt, kommt es doch häufig während des Trocknungsprozesses zu einer unerwünschten lokalen Verstärkung der Lackschicht. Der zu viel eingelagerte Lack kann beim gegenseitigen Verrasten der Profilelemente dazu führen, dass es zwischen den beteiligten Hakenabschnitten nicht zu einem vollständigen Einrasten kommt, da die an dem einen Hakenabschnitt ausgebildete Nase nicht vollständig hinter der an dem anderen Hakenabschnitt ausgebildeten Nase verriegelt. In einem solchen Fall ist die Verbindung der zwei Profilelemente unvollständig, so dass es für den Fall einer stark erhöhten oder schlagartigen seitlichen Belastung der Bordwand zu einem Aufbrechen der Verbindung kommen kann.

Der Erfindung liegt die **Aufgabe** zugrunde, durch konstruktive Maßnahmen zu einem stets sicheren, nämlich vollständigen Verrasten der zu verbindenden Profilelemente bei der Montage der Bordwand zu kommen.

Zur **Lösung** dieser Aufgabe wird bei einer Bordwand mit den eingangs angegebenen Merkmalen vorgeschlagen, dass die Hakenabschnitte im Bereich des Eckwinkels eine Aussparung zur Aufnahme von beispielsweise Verunreinigungen, Beschichtungsresten oder Lackansammlungen aufweisen.

Eine solche Aussparung kann eine sich über die gesamte Länge des Profilelements erstreckende Kehle oder Kehlnut sein. Entscheidend ist, dass die Aussparung ein gewisses Volumen bzw. ein Reservoir zur Aufnahme von sich in dem Eckwinkel ansammelnden Beschichtungsresten oder von anderen Materialien, z. B. von Verunreinigungen, bereitstellt. Eine solchermaßen ausgebildete Bordwand setzt sich daher aus Profilelementen zusammen, die sich auch im Fall einer vorab erfolgten Beschichtung und insbesondere Lackierung sicher und vor allem vollständig miteinander verrasten lassen, und bei denen diese Verrastung von derselben Güte ist, wie im Fall unbeschichteter und sauberer Profilelemente.

Mit einer Ausgestaltung der Bordwand wird in Bezug auf die vorzugsweise als Kehle oder als Kehlnut gestaltete Aussparung vorgeschlagen, dass daran einerseits die erste Fläche, und andererseits die zweite Fläche heranreicht.

Mit einer weiteren Ausgestaltung wird vorgeschlagen, dass die erste Fläche bis an die Aussparung heran flach verlaufend gestaltet ist.

Gemäß einer weiteren Ausgestaltung ist die zweite Fläche parallel zu den Innen- und Außenseiten des Profilelements angeordnet und bis an die Aussparung heran flach verlaufend gestaltet.

Gemäß einer weiteren Ausgestaltung beträgt die gegenüber der ersten und/oder der zweiten Fläche gemessene Tiefe der Aussparung zwischen 0,2 mm und 0,5 mm.

Vorzugsweise handelt es sich bei den die Bordwand bildenden Profilelementen um Strangpressprofile aus Leichtmetall, etwa aus Aluminium oder einer Legierung aus Aluminium und/oder Magnesium.

Schließlich ist eine weitere Ausgestaltung gekennzeichnet durch an den Längsrändern des Profilelements angeformte zweite Verriegelungselemente, die Bestandteil eines Schwenklagers zwischen dem Profilelement und dem benachbarten Profilelement sind.

Weitere Vorteile und Einzelheiten ergeben sich aus der nachfolgenden Beschreibung von Ausführungsbeispielen, wobei auf die Zeichnungen Bezug genommen wird. Darin zeigen:
- Fig. 1: in perspektivischer Darstellung eine abklappbar an einer Nutzfahrzeug-Ladefläche angeordnete Bordwand;
- Fig. 2: in perspektivischer Darstellung drei miteinander verbundene Profilelemente der Bordwand;
- Fig. 2a: die in Fig. 2 bezeichnete Einzelheit IIa in vergrößerter Darstellung;
- Fig. 3: ein Profilelement im Querschnitt;
- Fig. 4: einen Querschnitt durch den Verbindungsbereich zweier benachbarter und miteinander verriegelter Profilelemente;
- Fig. 4a: die in Fig. 4 bezeichnete Einzelheit IV in vergrößertem Maßstab;
- Fig. 4b: nochmals die in Fig. 4 bezeichnete Einzelheit IV in vergrößertem Maßstab;
- Fig. 5: eine zweite Ausführungsform des Verbindungsbereichs zweier Profilelemente und
- Fig. 6: eine dritte Ausführungsform des Verbindungsbereichs zweier Profilelemente.

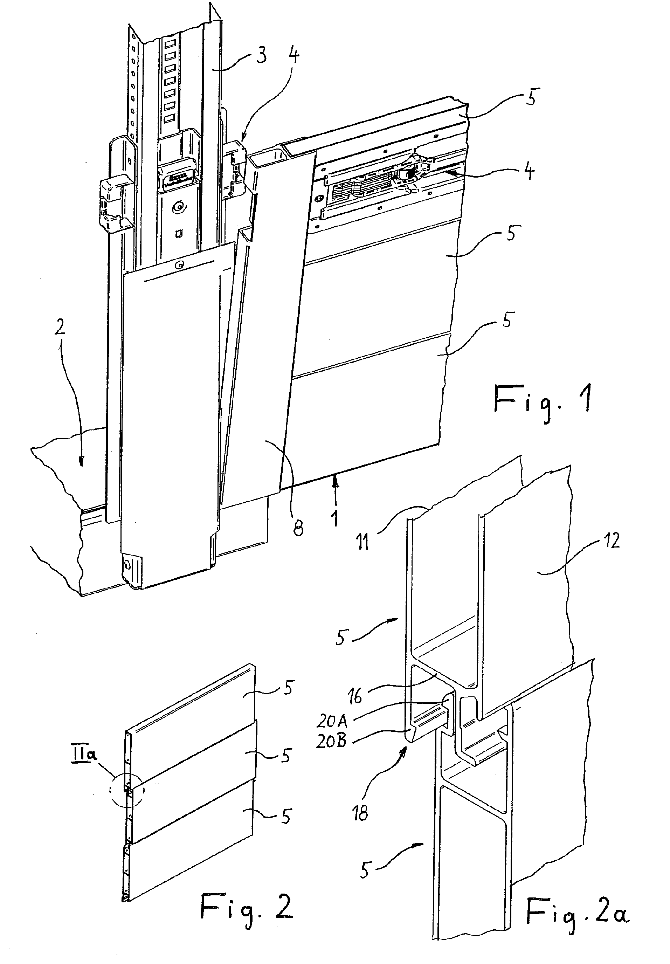

Die Fig. 1 zeigt den Rand einer Ladefläche eines Nutzfahrzeugs mit Pritschenaufbau. Zur Sicherung der Güter auf der Ladefläche 2 sind an dieser nach unten abklappbare Bordwände 1 angeordnet. Die Bordwände 1 sind entweder gegeneinander verriegelbar, oder sie sind an einer mit der Ladefläche 2 verbundenen Runge 3 verriegelbar, wie dies die Fig. 1 zeigt. Geeignete Verschlusseinrichtungen 4, welche in die Bordwand 1 oder in die Runge 3 integriert sein können, dienen der Verriegelung der aufgestellten Bordwand 1 an der Runge 3.

Die Bordwand 1 ist mehrteilig und setzt sich aus einzelnen, lattenförmigen Profilelementen 5 zusammen, sowie einem deren Profilenden zusammenfassenden, gegen die Runge 3 schwenkbaren Abschlussprofil 8.

Bei den miteinander verbundenen Profilelementen 5 handelt es sich um lattenförmige Strangpressprofile aus Leichtmetall, z. B. aus Aluminium oder einer Legierung aus Aluminium und/oder Magnesium. Zur Realisierung der Fläche der Bordwand 1 zeigt das Ausführungsbeispiel insgesamt drei Profilelemente 5. Selbstverständlich kann deren Anzahl, je nach Größe und insbesondere Breite der Profilelemente, auch eine andere sein.

Die Profilelemente 5 sind mittels längs ihrer Längsränder 13, 14 ausgebildeter Formschlusselemente miteinander verbunden und verriegelt, so dass sich eine aus den Profilelementen 5 zusammengesetzte, zumindest auf ihrer fahrzeugäußeren Seite flache Platte ergibt, wie dies vor allem Fig. 2 zeigt.

Jedes Profilelement 5 weist eine nach fahrzeuginnen gerichtete Innenseite 11 und eine nach fahrzeugaußen gerichtete Außenseite 12 auf. Die beiden Seiten 11, 12 befinden sich hier an zwei flachen Wänden, die über zwei oder mehr Querwände 16 miteinander verbunden sind. Das Profilelement 5 ist im übrigen von in etwa rechteckigem Querschnitt und sowohl längs seines ersten Längsrandes 13, als auch längs seines zweiten Längsrandes 14 mit angeformten Verbindungsstrukturen versehen, die durch formschlüssige Verbindung mit den korrespondierend gestalteten Strukturen des benachbarten Profilelements zu einem ersten Verbindungsbereich 17 und einem zweiten Verbindungsbereich 18 führen.

Der fahrzeugaußen angeordnete Verbindungsbereich ist als Schwenklager 17 ausgebildet, und der fahrzeuginnen angeordnete Verbindungsbereich als ein Rastbereich 18. Zum Verbinden zweier Profilelemente 5 werden diese zunächst an dem Schwenklager 17 ineinander gesteckt, wobei ein Profilabschnitt 19A des einen Profilelements hinter einen dazu parallelen Profilabschnitt 19B des anderen Profilelements greift. Sodann werden die Profilelemente um die so vorläufig gebildete Achse soweit verschwenkt, bis es im anderen Verbindungsbereich, also im Rastbereich 18, zu einem Hintergriff zweier nasenartiger Vorsprünge kommt. Erst damit sind die beiden Profilelemente formschlüssig gegeneinander verriegelt.

Die nasenartigen Vorsprünge befinden sich an Hakenabschnitten 20A, 20B, die sich über die gesamte Profillänge erstrecken. Die Hakenabschnitte können gegenüber dem übrigen Profilquerschnitt etwas nach innen bzw. außen wegfedern, da sich die Hakenabschnitte 20A, 20B an den freien Enden nur einseitig befestigter Profilabschnitte 20C befinden. Deren Länge und Wanddicke reicht aus, um ein nach-innen-Federn des innenliegenden Hakenabschnitts 20A und ein nach-außen-Federn des außenliegenden Hakenabschnitts 20B zu ermöglichen.

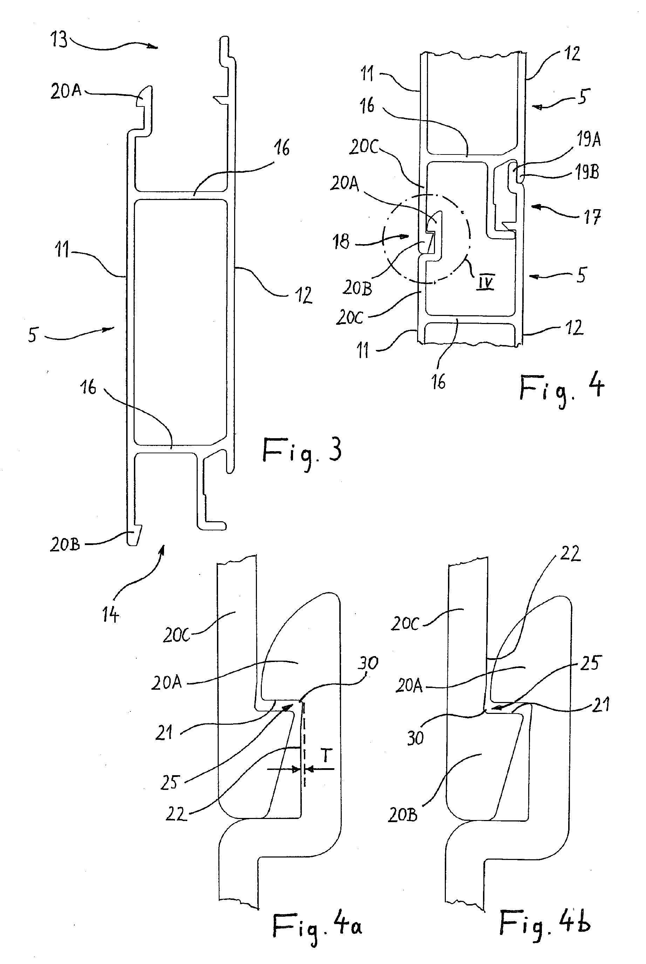

Aus der in den Figuren 4, 4a und 4b wiedergegebenen Verriegelungsstellung sind die beiden Profilelemente 5 nicht wieder lösbar, auch nicht durch eine der Verrastbewegung entgegengesetzte Bewegung. Vielmehr ist der Hintergriff der an den Hakenabschnitten 20A, 20B ausgebildeten Nasen endgültig, auch bei starker seitlicher Belastung. Voraussetzung hierfür ist allerdings, dass dieser Hintergriff keinen Beeinträchtigungen unterliegt, etwa weil sich die Nasen nicht vollständig sondern nur nahezu vollständig hintergreifen. Letzteres kann im Fall von Beschichtungsresten wie z.B. Lackresten oder im Fall von Verschmutzungen auftreten, die sich in den für den Hintergriff wichtigen Bereichen der Hakenabschnitte und insbesondere in den Eckwinkeln 25 der Hakenabschnitte ansammeln. Um dies auszuschließen und einen stets vollständigen Eingriff und damit eine stets vollständige Verriegelung der Profile im Rastbereich 18 zu erzielen, weisen die Hakenabschnitte 20A, 20B in den Eckbereichen jeweils eine sich durchgehend über die Profillänge erstreckende Aussparung 30 auf. Diese hat die Gestalt einer langgestreckten Kehle oder einer Kehlnut, in der sich Lack und andere Beschichtungsreste, Verunreinigungen oder andere den vollständige Formschluss behindernde Materialien wie in einem kleinen Reservoir ansammeln können, oder in die solche Materialien während des Verrastens der Profile ausweichen können.

Die zwei Hakenabschnitte 20A, 20B erstrecken sich längs der Längsränder 13, 14 der beiden beteiligten Profilelemente. Zur Erzielung des verriegelnden Eingriffs weisen die Hakenabschnitte 20A, 20B jeweils eine im Wesentlichen rechtwinklig zu den Seiten 11, 12 angeordnete bzw. sich erstreckende erste Fläche 21 auf, sowie eine gemeinsam mit der ersten Fläche 21 den Eckwinkel 25 definierende zweite Fläche 22, die sich ebenfalls parallel zu den Längsrändern 13, 14 erstreckt. Auch die Flächen 21, 22 erstrecken sich über die gesamte Profillänge und sie stehen rechtwinklig zueinander, weshalb auch der Eckwinkel 25 ein Rechter Winkel ist.

Die erste Fläche 21 ist bis an die Aussparung 30 heran flach verlaufend gestaltet. Auch die zweite Fläche 22, welche sich vorzugsweise parallel zu den Flachseite 11, 12 erstreckt, sollte bis an die Aussparung 30 heran flach verlaufend gestaltet sein.

In Fig. 4a wiedergegeben ist die gegenüber der zweiten Fläche 22 gemessene Tiefe T der hier als eine Kehle gestalteten Aussparung 30. Diese Tiefe T beträgt zwischen 0,2 und 0,5 mm, so die Kehle ein ausreichendes Volumen zur Aufnahme der sich beim Lackierprozess im Eckwinkel 25 sammelnden Lackfarbe hat.

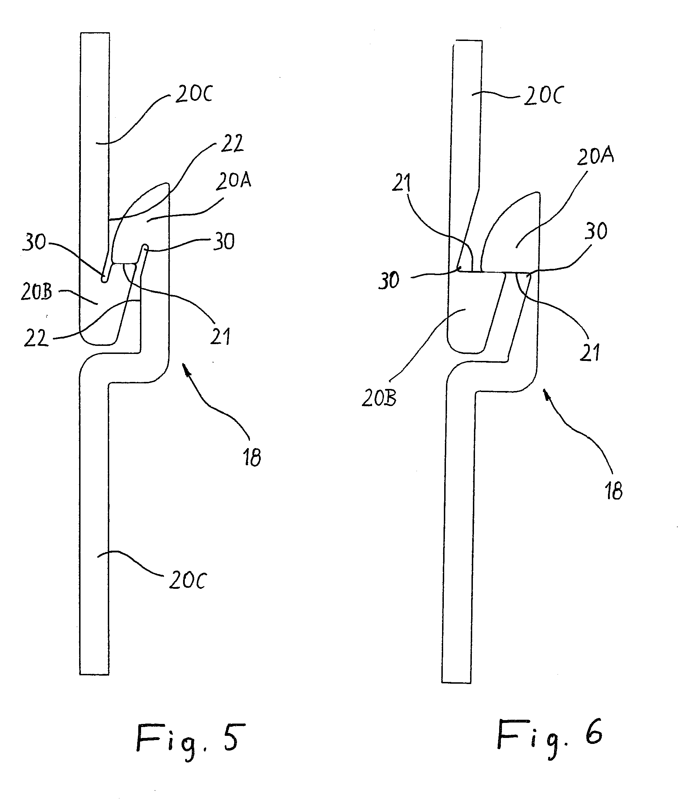

Gemäß der Variante Fig. 5 kann die zusätzliche Aussparung 30 im Eckwinkel 25 auch die Gestalt einer sich über die Profillänge erstreckenden Kehlnut von U-förmigem Querschnitt haben.

Alternativ lässt sich eine Aussparung 30 auch, wie in Fig. 6 dargestellt, durch einen V-förmigen Querschnitt in dem eckförmigen Übergangsbereich zwischen der ersten Fläche 21, die sich rechtwinklig zu den Flachseiten des Profils erstreckt, und der zweiten Fläche 22 erreichen.

### Bezugszeichenliste

- 1: Bordwand
- 2: Ladefläche
- 3: Runge
- 4: Verschlusseinrichtung
- 5: Profilelement
- 8: Abschlussprofil
- 11: Innenseite
- 12: Außenseite
- 13: Längsrand
- 14: Längsrand
- 16: Querwands
- 17: Schwenklager
- 18: Rastbereich
- 19A: Profilabschnitt
- 19B: Profilabschnitt
- 20A: Hakenabschnitt
- 20B: Hakenabschnitt
- 20C: Profilabschnitt
- 21: erste Fläche
- 22: zweite Fläche
- 25: Eckwinkel
- 30: Aussparung, Kehle

- T: Tiefe

## Patentansprüche

1. Bordwand für Nutzfahrzeug-Ladeflächen, die aus Profilelementen (5) mit jeweils einer Innenseite (11), einer Außenseite (12) und Verriegelungselementen an den beiden Längsrändern (13, 14) zusammengesetzt ist, wobei die Verriegelungselemente angeformte Hakenabschnitte (20A, 20B) sind, die mit korrespondierend gestalteten Hakenabschnitten des benachbarten Profilelements durch Verrasten verbindbar sind, und wobei die Hakenabschnitte (20A, 20B) eine im Wesentlichen rechtwinklig zu den Innen- und Außenseiten (11, 12) angeordnete erste Fläche (21) und eine gemeinsam mit der ersten Fläche (21) einen Eckwinkel (25) bildende zweite Fläche (22) aufweisen, **dadurch gekennzeichnet, dass** die Hakenabschnitte (20A, 20B) im Bereich des Eckwinkels (25) eine Aussparung (30) zur Aufnahme von beispielsweise Verunreinigungen, Beschichtungsresten oder Lackansammlungen aufweisen.

2. Bordwand nach Anspruch 1, **dadurch gekennzeichnet, dass** die erste Fläche (21) und die zweite Fläche (22) unter einem Winkel von 90° zueinander angeordnet sind.

3. Bordwand nach Anspruch 1 oder 2, **dadurch gekennzeichnet, dass** die Aussparung (30) eine Kehle oder Kehlnut im Eckwinkel (25) ist, an die einerseits die erste Fläche (21), und andererseits die zweite Fläche (22) heranreicht.

4. Bordwand nach Anspruch 1, 2 oder 3, **dadurch gekennzeichnet, dass** die erste Fläche (21) bis an die Aussparung (30) heran flach verlaufend gestaltet ist.

5. Bordwand nach einem der Ansprüche 1 bis 4, **dadurch gekennzeichnet, dass** die zweite Fläche (22) parallel zu den Innen- und Außenseiten (11, 12) angeordnet und bis an die Aussparung (30) heran flach verlaufend gestaltet ist.

6. Bordwand nach Anspruch 5, **dadurch gekennzeichnet, dass** die gegenüber der ersten Fläche (21) und/oder der zweiten Fläche (22) gemessene Tiefe (T) der Aussparung (30) zwischen 0,2 mm und 0,5 mm beträgt.

7. Bordwand nach einem der vorherigen Ansprüche, **dadurch gekennzeichnet, dass** die Profilelemente (5) Strangpressprofile aus Leichtmetall sind.

8. Bordwand nach einem der vorherigen Ansprüche, **gekennzeichnet durch** an den Längsrändern (13, 14) angeformte weitere Verriegelungselemente, die Bestandteil eines Schwenklagers (17) zwischen dem Profilelement (5) und dem benachbarten Profilelement sind.
